# EUROPEAN PATENT APPLICATION

(11) **EP 4 778 638 A1**
(43) Date of publication of application: **22.07.2026**
(21) Application number: 24865913.8
(22) Date of filing: 13.09.2024
(51) Int. Cl.: B09B 3/60, B29B 17/00, B09B 101/75

(54) **APPARATUS FOR DECOMPOSING POLYMER COMPOUND BY USING BIOCHEMICALLY ACTING SOLVENT**

(30) Priority: 14.09.2023 KR 20230122454
(71) Applicant: Repla Inc., Gyeongsan-si, Gyeongsangbuk-do 38541 (KR)
(72) Inventor: SUH, Dong Eun, Suwon-si Gyeonggi-do 16679 (KR); JEON, Byoung Jin, Suwon-si Gyeonggi-do 16679 (KR); RYU, Kyoung Ho, Suwon-si Gyeonggi-do 16679 (KR)
(74) Representative: Elzaburu S.L.P.
(86) International application number: PCT/KR2024/014035
(87) International publication number: WO 2025/058474

(57) **Abstract**

The present invention relates to an apparatus for decomposing a polymer compound using a biochemically active solvent, comprising: a tank in which an inlet and an outlet are formed to allow a polymer compound to pass therethrough, and in which the biochemically active solvent is contained; a transfer unit configured to move the polymer compound supplied through the inlet toward the outlet; and an agitation unit configured to allow the polymer compound being moved by operation of the transfer unit to flow in a direction away from a moving direction thereof, thereby agitating the polymer compound and the biochemically active solvent and increasing the number of contacts and contact time between the polymer compound and the biochemically active solvent.

## Description

### [Technical Field]

The present invention relates to an apparatus for decomposing a polymer compound using a biochemically active solvent.

### [Background Art]

Plastic, which is an example of polymer compounds, accounts for a significantly larger portion of industrial waste and domestic waste than metal. Accordingly, when its value is economically converted, it surpasses that of metal. Meanwhile, due to the depletion of petroleum, which is the main raw material of plastic, the need for recycling plastic discharged as waste is becoming increasingly prominent.

When plastic is recycled, various types of plastics are typically used within a single product, and various types of plastics are collected and recycled together. Consequently, each plastic material acts as an impurity to other plastic materials, making it difficult to fully maintain purity as a single-material type. As a result, quality is degraded and the economic value is evaluated to be approximately 34% lower than that of virgin plastic. In particular, it is difficult to economically separate mixed plastic waste contained in domestic waste according to their properties, and thus there is an urgent need for the development of technology for sorting mixed plastic waste.

The plastic recycling process largely consists of a pretreatment process and a recycling process, where mixed plastic waste is separated and sorted according to their properties in the pretreatment process. A wet flotation sorting method is mainly used to separate and sort mixed plastic waste by properties, but a large amount of water is required for wet flotation sorting, and even after wet flotation sorting, approximately 2% of other materials remain mixed, resulting in recycling into low-grade plastic. In particular, since polyvinyl chloride (PVC) acts as an impurity in plastics that have undergone wet flotation sorting, the prior removal of PVC is essential in the pretreatment process of the plastic recycling process.

Meanwhile, recently, technologies for treating plastics contained in wastewater or waste using a biochemically active solvent have been developed. For example, Korean Registered Patent No. 10-0350928 discloses a novel biochemically active solvent, Klebsiella pneumoniae CJ-PVA a (Accession No. KFCC-11126), which exhibits favorable growth under aerobic conditions and has improved polyvinyl alcohol decomposition capability, and a method for treating wastewater containing polyvinyl alcohol using the same.

In addition, Korean Registered Patent No. 10-0513931 discloses Microbacterium barkeri LC (Accession No. KCCM 10507) and a method for biologically decomposing polyvinyl alcohol using the same.

Tenebrio molitor is a species of insect belonging to the family Tenebrionidae. The larva of Tenebrio molitor is commonly referred to as a mealworm and is mainly used as pet food and an edible insect. In 2015, it was discovered that mealworms are capable of decomposing polystyrene into reusable organic substances [Jordan, Rob. "Plastic-eating worms may offer solution to mounting waste, Stanford researchers discover". Stanford News Service. Retrieved 24 March 2016.]. However, the plastic decomposition mechanism of mealworms has not been elucidated, and as a result, commercialization has not been attempted.

The background art of the present invention is disclosed in Korean Registered Patent Publication No. 10-2126889 (published on June 26, 2020, title of the invention: Novel biochemically active solvent having plastic decomposition activity and use thereof).

### [Disclosure]

### [Technical Problem]

A method for decomposing plastic waste using microorganisms according to the related art lacks a specific technical configuration for agitating a microorganism culture medium with plastic waste. Furthermore, it lacks a specific technical configuration for performing a decomposition process by continuously supplying a large amount of plastic waste and agitating it with the microorganism culture medium. Furthermore, it lacks a technical configuration for performing a decomposition process by continuously supplying a large amount of plastic waste and agitating it with the microorganism culture medium. Consequently, it is difficult to decompose a large amount of plastic waste continuously, which leads to a problem in that it is difficult to reduce the time and cost required for the plastic waste decomposition process.

Therefore, there is a need for improvement.

The present invention is directed to providing an apparatus for decomposing a polymer compound using a biochemically active solvent, which is capable of improving a recycling rate of a polymer compound by extracting a high-purity polymer compound formed of one material among polymer compounds formed of a plurality of materials. Furthermore, the apparatus includes a transfer unit configured to pass the polymer compound at a constant speed through a tank filled with a biochemically active solvent that decomposes the remaining materials among the plurality of materials of the polymer compound, thereby enabling the decomposition of a large amount of polymer compounds through a continuous process and reducing the time and cost required for the polymer compound decomposition process.

### [Technical Solution]

The present invention includes: a tank in which an inlet and an outlet are formed to allow a polymer compound to pass therethrough and a biochemically active solvent is contained; a transfer unit configured to move the polymer compound supplied through the inlet toward the outlet; and an agitation unit configured to allow the polymer compound being moved by operation of the transfer unit to flow in a direction away from a moving direction thereof and agitate the polymer compound and the biochemically active solvent to increase the number of contacts and contact time between the polymer compound and the biochemically active solvent, wherein a gap between the transfer unit and the tank is formed to be smaller than a particle diameter of a crushed polymer compound, such that when the polymer compound is moved toward the outlet by the operation of the transfer unit, the biochemically active solvent flows through the gap between the transfer unit and the tank while the biochemically active solvent remains contained in the tank during a continuous process of decomposing the polymer compound.

Furthermore, the present invention further includes a residue prevention unit configured to prevent the polymer compound being moved by the operation of the transfer unit from remaining and not passing through the outlet.

Furthermore, the residue prevention unit of the present invention includes an inclined portion formed such that a diameter of the tank decreases toward the outlet, and the polymer compound moved toward the outlet by the operation of the transfer unit rises along the inclined portion and is discharged to the outside of the tank through the outlet.

Furthermore, the transfer unit of the present invention includes: a screw member configured to move the polymer compound supplied into the tank through the inlet toward the outlet, and to raise the polymer compound along the inclined portion to be discharged to the outside of the tank; and a driving unit configured to supply power to the screw member.

Furthermore, the screw member of the present invention includes: a drive shaft rotatably installed at the inlet and the outlet; a first screw formed in a helical shape about the drive shaft and configured to press and move the polymer compound supplied to the tank toward the outlet when the drive shaft is rotated in one direction; and a second screw integrally connected to the first screw and formed in a helical shape on the drive shaft, the second screw having a diameter that gradually decreases toward the outlet to maintain a constant gap with the inclined portion.

Furthermore, the present invention further includes a support unit configured to rotatably support the transfer unit and allow the polymer compound supplied to or discharged from the tank to pass therethrough.

Furthermore, the support unit of the present invention includes: a socket body into which the drive shaft of the transfer unit is rotatably inserted and which is installed at the inlet or the outlet; a coupling rib which protrudes from the socket body and into which the inlet or the outlet is inserted; a coupling ring fastened to the coupling rib to couple the coupling rib to the inlet or the outlet; and a through-hole portion provided in the socket body to allow the polymer compound moving through the inlet or the outlet to pass therethrough.

Furthermore, the present invention further includes a transmission unit provided in the support unit to allow power provided by the driving unit to be transmitted to the drive shaft through the support unit.

Furthermore, the transmission unit of the present invention includes a transmission hole portion provided in the socket body to allow a gear member of the driving unit is inserted thereinto and gear-coupled to the drive shaft.

Furthermore, the driving unit of the present invention includes: a gear member connected to an output shaft of a motor that provides power and inserted along the transmission hole portion; and a power transmission unit configured to provide power to the transfer unit by transmitting power transmitted from the gear member toward the inlet or the outlet.

Furthermore, the power transmission unit of the present invention includes: first gear teeth provided on the drive shaft inserted into the socket body from the inlet and gear-coupled to the gear member; and second gear teeth provided on another drive shaft inserted into the socket body from the outlet and gear-coupled to the gear member, wherein a pair of tanks are disposed adjacent to each other, and the drive shaft extending from the inlet of one of the tanks and the drive shaft extending from the outlet of the other of the tanks are inserted into the socket member and disposed in contact with each other, and the first gear teeth and the second gear teeth provided on the pair of drive shafts are simultaneously gear-coupled to the gear member.

Furthermore, the agitation unit of the present invention includes: an agitation blade disposed between the first screw or the second screw so as to allow the polymer compound and the biochemically active solvent to flow in a direction away from the moving direction thereof when the polymer compound is moved toward the outlet by the operation of the transfer unit; and a sieve hole portion provided in the agitation blade.

Furthermore, the present invention includes: a tank in which an inlet and an outlet are formed to allow a polymer compound to pass therethrough and a biochemically active solvent is contained; a transfer unit configured to move the polymer compound supplied through the inlet toward the outlet; an agitation unit configured to allow the polymer compound being moved by operation of the transfer unit to flow in a direction away from a moving direction thereof and agitate the polymer compound and the biochemically active solvent to increase the number of contacts and contact time between the polymer compound and the biochemically active solvent; and a jamming prevention unit providing a flow path through which the polymer compound passes along the transfer unit, wherein, when the polymer compound is moved toward the outlet by the operation of the transfer unit, the polymer compound moves along the flow path formed by the jamming prevention unit to prevent the polymer compound from being jammed between the tank and the transfer unit or between the screw member and a barrel member, and the biochemically active solvent passes through an inner side or an outer side of the jamming prevention unit, and the biochemically active solvent remains contained in the tank during a continuous process of decomposing the polymer compound.

Furthermore, the jamming prevention unit of the present invention includes: the barrel member in which the transfer unit is integrally installed and which is rotatably installed in the tank; and a plurality of mesh hole portions provided in the barrel member to allow the biochemically active solvent to pass through an inner side or an outer side of the barrel member.

Furthermore, the transfer unit of the present invention includes: a screw member configured to move the polymer compound supplied into the tank through the inlet toward the outlet and to raise the polymer compound along the inclined portion to be discharged to the outside of the tank; and a driving unit configured to supply power to the screw member, wherein an end of the screw member is joined to the barrel member such that no gap is formed between the screw member and the barrel member, and the screw member and the barrel member rotate integrally.

Furthermore, the present invention further includes a residue prevention unit configured to prevent the polymer compound, which is moved along the jamming prevention unit by the operation of the transfer unit, from remaining and not passing through the outlet.

Furthermore, the residue prevention unit of the present invention includes an inclined portion formed such that a diameter of the barrel member decreases toward the outlet, and the polymer compound moved toward the outlet by the operation of the transfer unit rises along the inclined portion and is discharged to the outside of the tank through the outlet.

### [Advantageous Effects]

An apparatus for decomposing a polymer compound using a biochemically active solvent according to the present invention includes a transfer unit configured to continuously supply and pass the polymer compound through a tank filled with a biochemically active solvent. Accordingly, while continuously supplying a large amount of the polymer compound into the tank and agitating it with the biochemically active solvent, a high-purity polymer compound formed of one material among polymer compounds formed of a plurality of materials can be continuously extracted. This provides an advantage of reducing the time and cost required for the decomposition process of a large amount of the polymer compound.

Furthermore, the apparatus for decomposing a polymer compound using a biochemically active solvent according to the present invention includes an agitation unit configured to allow the polymer compound, which is introduced into the tank and moved toward the outlet, to flow in a vertical direction. Accordingly, while the polymer compound passes through the tank, the biochemically active solvent contained in the tank and the polymer compound are agitated in the vertical direction, thereby increasing the contact area and the contact time between the polymer compound and the biochemically active solvent. This improves the efficiency of the polymer compound decomposition process, which provides an advantage of further increasing the purity of the polymer compound produced by the decomposition process, such as plastic.

Furthermore, the apparatus for decomposing a polymer compound using a biochemically active solvent according to the present invention includes a residue prevention unit configured to prevent the polymer compound discharged through the outlet of the tank from failing to pass a boundary between the outlet and the tank and remaining inside the tank. Accordingly, even when a large amount of polymer compounds is decomposed through a continuous process, the polymer compound can be prevented from remaining inside the tank. This provides an advantage in that a tank cleaning operation, which is required when an accumulated amount of polymer compounds remaining inside the tank exceeds a set value, can be omitted.

Furthermore, the apparatus for decomposing a polymer compound using a biochemically active solvent according to the present invention includes a support unit configured to rotatably support the transfer unit. Accordingly, even when the transfer unit is driven for a long period, the transfer unit can be prevented from being displaced due to operational vibrations, and thus a constant gap between the transfer unit and an inner wall of the tank can be maintained. This provides an advantage of preventing the polymer compound from remaining inside the tank without being moved due to leaking out from the transfer unit as the gap between the transfer unit and the inner wall of the tank widen.

Furthermore, the apparatus for decomposing a polymer compound using a biochemically active solvent according to the present invention is advantageous in that the gap between the transfer unit and the inner wall of the tank formed to be smaller than a diameter of a crushed polymer compound. This prevents interference between the transfer unit and the inner wall of the tank while simultaneously preventing the loss of the polymer compound through the gap, thereby more effectively preventing the polymer compound from remaining inside the tank.

Furthermore, the apparatus for decomposing a polymer compound using a biochemically active solvent according to the present invention is advantageous in that a through-hole portion through which the polymer compound passes is provided in the socket body forming the support unit. Accordingly, the polymer compound moved by the operation of the transfer unit can be discharged to the outside of the tank through the through-hole portion along the outlet. In addition, it is possible to provide a decomposition apparatus in which a plurality of processes are performed in succession, by arranging a plurality of tanks in series and connecting them such that the outlet of a first tank and the inlet of a second tank communicate with each other.

Furthermore, the apparatus for decomposing a polymer compound using a biochemically active solvent according to the present invention includes a transmission unit for connecting the driving unit and the drive shaft such that power transmitted from the driving unit disposed outside the tank is transmitted to the drive shaft of the transfer unit through the support unit. Accordingly, a separate technical configuration for transmitting power to the drive shaft disposed inside the tank is not required, thereby reducing the time and cost required for installing the driving unit. This also allows a plurality of tanks to be easily connected, thereby reducing the time and cost required for an installation operation to connect a plurality of decomposition apparatuses or a replacement operation for any one of the plurality of decomposition apparatuses.

Furthermore, the apparatus for decomposing a polymer compound using a biochemically active solvent according to the present invention further includes a jamming prevention unit configured to prevent the polymer compound from being jammed in a gap between the tank and the transfer unit, and thus a malfunction caused by the polymer compound being jammed in a gap between the screw member of the transfer unit and the inner wall of the tank while being moved along the inside of the tank can be prevented.

Furthermore, the apparatus for decomposing a polymer compound using a biochemically active solvent according to the present invention has the first screw and the second screw forming the screw member welded and integrally joined to an inner wall of the barrel member of the jamming prevention unit. Since the first screw, the second screw, and the barrel member rotate integrally, the polymer compound introduced into the tank is moved by the first screw and the second screw along the barrel member without coming into contact with the inner wall of the tank. As the biochemically active solvent passes through the inside or outside of the barrel member along the plurality of mesh hole portions formed in the barrel member, the solvent comes into contact with the polymer compound to perform a decomposition process, thereby effectively preventing a malfunction caused by the polymer compound being jammed in a gap between the first screw and the second screw and the tank, or in a gap between the first screw and the second screw and the barrel member.

### [Description of Drawings]

FIG. 1 is a perspective view illustrating an apparatus for decomposing a polymer compound using a biochemically active solvent according to a first embodiment of the present invention.
FIG. 2 is a cross-sectional view illustrating the apparatus for decomposing a polymer compound using a biochemically active solvent according to the first embodiment of the present invention.
FIG. 3 is a view illustrating a gap between a transfer unit and a tank of the apparatus for decomposing a polymer compound using a biochemically active solvent according to the first embodiment of the present invention.
FIG. 4 is a cross-sectional view illustrating a support unit and a transmission unit of the apparatus for decomposing a polymer compound using a biochemically active solvent according to the first embodiment of the present invention.
FIG. 5 is a side view illustrating the support unit of the apparatus for decomposing a polymer compound using a biochemically active solvent according to the first embodiment of the present invention.
FIG. 6 is a cross-sectional view illustrating an apparatus for decomposing a polymer compound using a biochemically active solvent according to a second embodiment of the present invention.
FIG. 7 is a cross-sectional view illustrating an apparatus for decomposing a polymer compound using a biochemically active solvent according to a third embodiment of the present invention.

### [Best Mode]

Hereinafter, embodiments of an apparatus for decomposing a polymer compound using a biochemically active solvent according to the present invention will be described with reference to the accompanying drawings.

In this process, the thicknesses of lines or sizes of components shown in the drawings may be exaggerated for clarity and convenience of description.

Furthermore, the terms to be described below are defined in consideration of their functions in the present invention and may vary according to the intention or customs of a user or an operator.

Therefore, definitions of these terms should be made based on the content throughout the present specification.

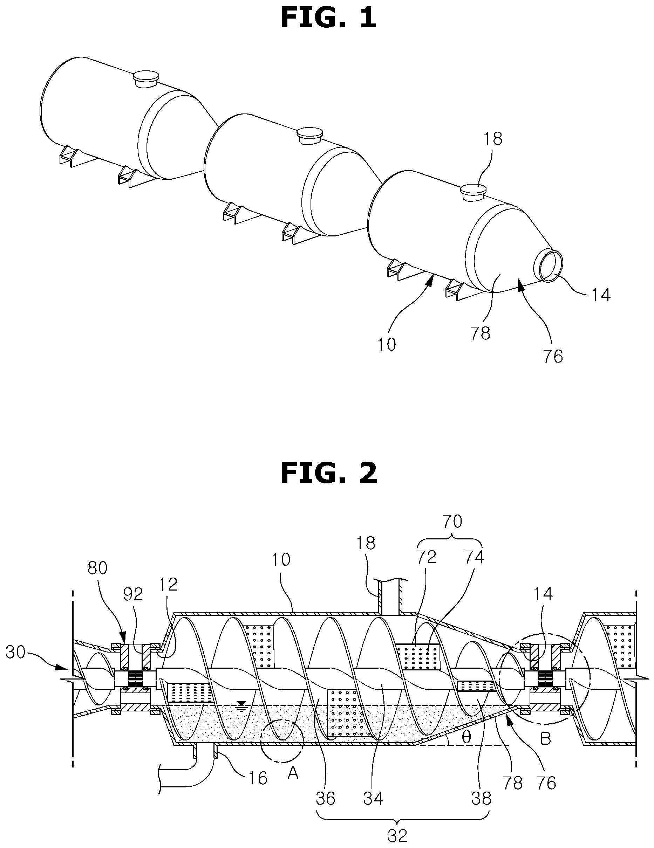

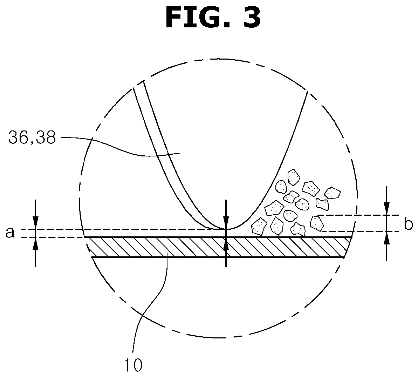

FIG. 1 is a perspective view illustrating an apparatus for decomposing a polymer compound using a biochemically active solvent according to a first embodiment of the present invention, FIG. 2 is a cross-sectional view illustrating the apparatus for decomposing a polymer compound using a biochemically active solvent according to the first embodiment of the present invention, and FIG. 3 is a view illustrating a gap between the transfer unit and the tank of the apparatus for decomposing a polymer compound using a biochemically active solvent according to the first embodiment of the present invention.

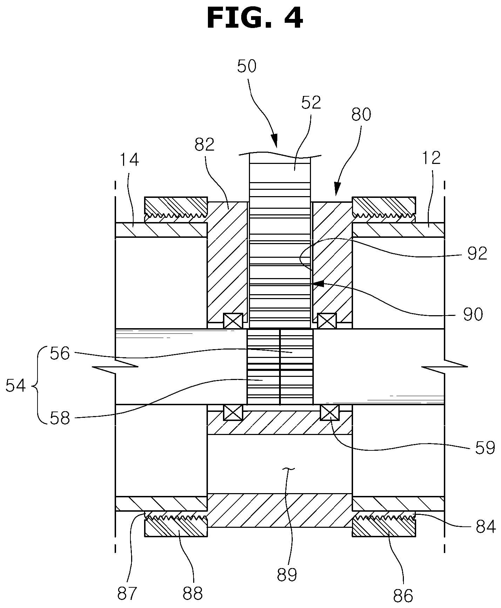

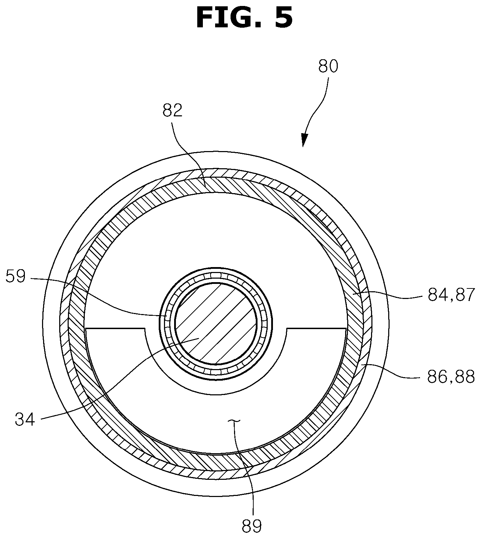

In addition, FIG. 4 is a cross-sectional view illustrating the support unit and the transmission unit of the apparatus for decomposing a polymer compound using a biochemically active solvent according to the first embodiment of the present invention, and FIG. 5 is a side view illustrating the support unit of the apparatus for decomposing a polymer compound using a biochemically active solvent according to the first embodiment of the present invention.

Referring to FIGS. 1 to 5, the apparatus for decomposing a polymer compound using a biochemically active solvent according to an embodiment of the present invention includes a tank 10 in which an inlet 12 and an outlet 14 are formed such that a polymer compound passes therethrough, and a biochemically active solvent is stored; a transfer unit 30 configured to move the polymer compound, supplied through the inlet 12, toward the outlet 14; and an agitation unit 70 configured to allow the polymer compound being moved by the operation of the transfer unit 30 to flow in a direction away from a moving direction thereof and agitate the polymer compound and the biochemically active solvent to increase the number of contacts and the contact time between the polymer compound and the biochemically active solvent.

Accordingly, the crushed polymer compound supplied through the inlet 12 is agitated with the biochemically active solvent contained in the tank 10. Among the polymer compounds formed of a plurality of materials, the polymer compounds formed of the remaining materials except for the polymer compounds formed of one material are decomposed by the biochemically active solvent, thereby allowing the polymer compound to be regenerated into a high-purity polymer compound of a single material, for example, a high-purity plastic.

Here, as shown in FIG. 2, the gap between the transfer unit 30 and the tank 10 of the present embodiment is formed to be smaller than the particle diameter of the crushed polymer compound, such that when the polymer compound is moved toward the outlet 14 by the operation of the transfer unit 30, the biochemically active solvent flows through the gap between the transfer unit 30 and the tank 10, while the biochemically active solvent may remain contained in the tank 10 during a continuous process of decomposing the polymer compound.

Accordingly, a continuous process for continuously decomposing a large amount of the polymer compounds by the biochemically active solvent contained in the tank 10 can be performed, thereby significantly reducing the time and cost required for a decomposition process of a large amount of the polymer compounds.

The polymer compound is crushed to a particle diameter of 0.5 to 3 cm and supplied into the tank 10. Since the gap between the transfer unit 30 and the inner wall of the tank 10 is 0.1 to 0.3 cm, it is possible to prevent a malfunction in which the polymer compound escapes through the gap between the transfer unit 30 and the tank 10 and fails to be conveyed.

In addition, as shown in FIG. 1, the present embodiment can provide a system in which a plurality of tanks 10 are connected in series so that a continuous process including input, washing, biochemically active solvent decomposition, washing, and drying is performed in stages, while the polymer compound passes through the plurality of tanks 10 in stages.

A first tank 10 is a liquid reactor in which sterilization including input and washing processes of the polymer compound is performed, a second tank 10 is where degradation including a biochemically active solvent decomposition process is performed, and a third tank 10 is where wash and dry including washing and drying processes is performed.

As described above, the input, washing, biochemically active solvent decomposition, washing, and drying processes of the polymer compound can be continuously performed using three tanks 10, and the decomposition apparatus of the present embodiment is installed between a crushing process and an extrusion process of the polymer compound.

Accordingly, a crushing process and a specific gravity sorting process may be performed before supplying the polymer compound to the decomposition apparatus, and after the decomposition process is completed, a drying process and an extrusion process for producing pellets may be performed.

In the first tank 10 of the present embodiment, an ethanol solution having a concentration range capable of sterilization may fill throughout the inside of the tank 10, and then drying may be performed using a hot air blower so that ethanol does not remain in the subsequent sections of tanks 10. Alternatively, sterilization may be performed in a single tank 10 using a gamma-ray sterilizer, and simultaneously, a process of blowing small non-plastic foreign materials upward using a blower may be performed to filter them out. To collect the residues moving to the upper portion of the tank 10, a discharge port 18 may be installed at the upper portion.

Among the tanks 10 of the present embodiment, in the second tank 10 to be filled with the biochemically active solvent, a biochemically active solvent culture medium formed by specially preparing plastic-degrading bacteria is contained inside the tank 10 for biochemically active solvent decomposition.

Furthermore, an air inlet 16 capable of aeration is provided at a lower portion of the tank 10 to support the survival of the biochemically active solvent and the decomposition of plastic, and an air pump and a HEPA filter are mounted in a pipe extending from the inlet 16 to provide sterile air.

Basically, organic matter can be completely decomposed and does not need to be separately collected, but some organic matter and inorganic matter may accumulate externally and may be connected via a pipe so as to be collected in a separate space.

Further, since aging or death of the biochemically active solvent may occur, a biochemically active solvent culture medium and a culture medium inlet 16 may be installed at an upper portion of the tank 10 to maintain an optimal state of the biochemically active solvent, and various sensors and culture control devices may be attached to monitor and manage the state inside the tank 10.

Accordingly, the growth state and the decomposition degree of the biochemically active solvent may be monitored through sensors. The sensors, which may be installed at an upper portion of the tank 10, may include a pH sensor, a temperature sensor, an optical density (OD) sensor, a carbon dioxide sensor, and a harmful substance concentration sensor capable of inhibiting the growth of various types of biochemically active solvents.

The control devices may include an oxygen concentration controller, a temperature controller, a humidity controller, a pH controller, and the like, and may control phenomena detected by the sensors and manage the culture environment of the biochemically active solvent.

To prevent the introduction of bacterial contaminants, a pressurizer capable of maintaining the inside of the tank 10 at positive pressure, an air outlet 14 capable of rapidly replacing air whose composition has rapidly changed, and a sealing member may be installed, the sealing member being disposed in a gap between the tank 10 and a support unit 80 and formed of a latex material having strong elasticity and adhesion to prevent primary leakage of the culture medium to the outside.

In the third tank 10 of the present embodiment, high-pressure water spray nozzles may be installed in all directions at an upper portion of the tank 10 so as to perform a high-pressure water washing process for removing the biochemically active solvent and producing a clean polymer compound for reuse. As the washing water sprayed from the water spray nozzles collides with the polymer compound passing along a lower portion of the tank 10, the biochemically active solvent may be physically removed and sterilized.

A hot-air generator may be installed at a rear portion of the tank 10 to dry the polymer compound. Since there is a concern of proliferation of the biochemically active solvent or introduction of foreign substances if moisture remains in the barrel after water washing, a drain port may be installed in the tank 10 to drain the washing water.

The control devices may be operated using a central processing system capable of checking and handling data from the above-described sensors at one time and communication equipment capable of remote control. Generally, in systems using organisms, it is important to create a continuous and constant environment, and if power is interrupted, a critical decrease in decomposition efficiency may occur. To prevent such a problem, a power storage system may be configured to supply auxiliary power in an emergency using solar cells.

Residue collected inside the tank 10 may be manually collected using the outlet 14. However, an automatic collection device may be added inside to improve the convenience of collection.

A sieve having a dense structure such as a net may be installed at an upper edge of the barrel to collect residue from the entire upper portion while the barrel rotates. The sieve may be connected to the central shaft of the screw of each barrel and may be provided to continuously rotate therein.

When a capacity limit of the collection device is reached and collection is required, or when additional substances are to be added, the collection device may be mechanically separated through the control device, and the contents of the collection device may be taken out from the outlet 14.

In addition, as shown in FIG. 2, the present embodiment further includes a residue prevention unit 76 configured to prevent the polymer compound being moved by the operation of the transfer unit 30 from remaining and not passing through the outlet 14.

The residue prevention unit 76 of the present embodiment includes an inclined portion 78 formed such that a diameter of the tank 10 decreases toward the outlet 14, and thus the polymer compound moved toward the outlet 14 by the operation of the transfer unit 30 rises along the inclined portion 78 and is discharged to the outside of the tank 10 through the outlet 14.

The transfer unit 30 of the present embodiment includes a screw member 32 configured to move the polymer compound supplied into the tank 10 through the inlet 12 toward the outlet 14 and to raise the polymer compound along the inclined portion 78 to be discharged to the outside of the tank 10, and a driving unit 50 configured to supply power to the screw member 32.

Accordingly, power is transmitted to the screw member 32 by the operation of the driving unit 50 installed outside the tank 10, and as the screw member 32 installed from the inlet 12 to the outlet 14 of the tank 10 is rotated in one direction, the polymer compound supplied into the tank 10 through the inlet 12 moves along the screw member 32 toward the outlet 14 while coming into contact with the biochemically active solvent, thereby performing the decomposition process.

The screw member 32 of the present embodiment includes a drive shaft 34 rotatably installed at the inlet 12 and the outlet 14, a first screw 36 formed in a helical shape about the drive shaft 34 and configured to press and move the polymer compound supplied to the tank 10 toward the outlet 14 when the drive shaft 34 is rotated in one direction, and a second screw 38 integrally connected to the first screw 36 and formed in a helical shape on the drive shaft 34, the second screw 38 having a diameter that gradually decreases toward the outlet 14 to maintain a constant gap with the inclined portion 78.

Accordingly, the second screw 38 is disposed along the inclined portion 78 formed such that the diameter of the tank 10 decreases, and the gap between the second screw 38 and the inclined portion 78 may be maintained at 0.1 to 0.3 cm, and thus the polymer compound moved to the inclined portion 78 by the rotational motion of the first screw 36 may be raised along the inclined portion 78 by the rotational motion of the second screw 38 and move to the outlet 14.

The agitation unit 70 of the present embodiment includes an agitation blade 72 disposed between the first screw 36 or the second screw 38 so as to allow the polymer compound and the biochemically active solvent to flow in a direction away from the moving direction thereof when the polymer compound is moved toward the outlet 14 by the operation of the transfer unit 30, and a sieve hole portion 74 provided in the agitation blade 72.

Accordingly, the polymer compound moved toward the outlet 14 by the rotational motion of the first screw 36 and the second screw 38 collides with the agitation blade 72, thereby flowing in a vertical direction of the tank 10. As a flow, in which the polymer compound is submerged into the biochemically active solvent and then rises to an upper portion of the tank 10, is repeated, the number of contacts and the contact time with the biochemically active solvent flowing to upper and lower portions of the culture medium are increased. This enables a more effective decomposition process of the polymer compound by the biochemically active solvent.

In addition, when the agitation blade 72 and the biochemically active solvent collide, the culture medium may flow more than necessary due to the agitation blade 72. However, since a plurality of sieve hole portions 74 are formed in the agitation blade 72 of the present embodiment, the culture medium passes through the plurality of sieve hole portions 74 to prevent the biochemically active solvent from flowing more than necessary.

In addition, a portion of the biochemically active solvent passes through the sieve hole portions 74 and flows in a relatively small amount. Accordingly, it is possible to prevent a malfunction in which the biochemically active solvent is entirely driven to one portion of the tank 10 by the first screw 36, the second screw 38, and the agitation blade 72.

In addition, the present embodiment further includes a support unit 80 that rotatably supports the transfer unit 30 and allows the polymer compound supplied to or discharged from the tank 10 to pass therethrough, and the support unit 80 includes a socket body 82 into which the drive shaft 34 of the transfer unit 30 is rotatably inserted and which is disposed at the inlet 12 or the outlet 14, a coupling rib which protrudes from the socket body 82 and into which the inlet 12 or the outlet 14 is inserted, a coupling ring fastened to the coupling rib to couple the coupling rib to the inlet 12 or the outlet 14, and a through-hole portion 89 provided in the socket body 82 to allow the polymer compound moving through the inlet 12 or the outlet 14 to pass therethrough.

The socket body 82 is formed in a circular block shape having a larger diameter than those of the inlet 12 and the discharge port 18. One of the inlet 12 or the outlet 14 is inserted into one surface of the socket body 82 and the other is inserted into the other surface thereof, thereby connecting a pair of tanks 10 disposed adjacent to each other and simultaneously supporting a pair of drive shafts 34.

A first coupling rib 84 protrudes from one surface of the socket member, and one of the inlet 12 or the discharge port 18 is inserted therein, and a second coupling rib 87 protrudes from the other surface of the socket member, and the other of the inlet 12 or the discharge port 18 is inserted therein.

The first coupling rib 84 and the second coupling rib 87 have threads formed on outer walls thereof and are provided with a plurality of cut portions, and thus when the inlet 12 or the outlet 14 is inserted, the first coupling rib 84 or the second coupling rib 87 expands, thereby allowing the inlet 12 or the outlet 14 to be easily inserted.

A first coupling ring 86 and a second coupling ring 88 are respectively fastened to the first coupling rib 84 and the second coupling rib 87, and when the first coupling ring 86 or the second coupling ring 88 is fastened to the first coupling rib 84 or the second coupling rib 87 after the inlet 12 or the outlet 14 is inserted into the first coupling rib 84 or the second coupling rib 87, the first coupling rib 84 and the second coupling rib 87 are brought into close contact with and connected to the inlet 12 and the outlet 14.

In addition, a through-hole portion is formed at a central portion of the socket body 82, and the drive shaft 34 extending from the tank 10 is inserted therein, a bearing 59 is disposed on an inner wall of the through-hole portion, and thus the drive shaft 34 is rotatably supported by the socket body 82.

In addition, the present embodiment further includes a transmission unit 90 provided in the support unit 80 to allow power provided by the driving unit 50 to be transmitted to the drive shaft 34 through the support unit 80, and the transmission unit 90 includes a transmission hole portion 92 provided in the socket body 82 so that a gear member 52 of the driving unit 50 is inserted therein and gear-coupled to the drive shaft 34.

A transmission hole portion 92 extending from an upper end to the through-hole portion is formed in an upper portion of the socket body 82 through which the polymer compound does not pass, and the gear member 52 of the driving unit 50 is inserted along the transmission hole portion 92 and gear-coupled to the drive shaft 34 installed in the through-hole portion.

Accordingly, power provided from a driving source disposed outside the tank 10 is transmitted to the drive shaft 34 through the gear member 52, thereby enabling rotation of the first screw 36 and the second screw 38.

The driving unit 50 of the present embodiment includes a gear member 52 connected to an output shaft of a motor that provides power and inserted along the transmission hole portion 92, and a power transmission unit 90, 54 configured to transmit power transmitted from the gear member 52 toward the inlet 12 or the outlet 14 to provide power to the transfer unit 30.

In addition, the power transmission unit 90, 54 of the present embodiment includes first gear teeth 56 provided on the drive shaft 34 inserted into the socket body 82 from the inlet and gear-coupled to the gear member 52, and second gear teeth 58 provided on another drive shaft 34 inserted into the socket body 82 from the outlet 14 and gear-coupled to the gear member 52.

Accordingly, a pair of tanks 10 are disposed adjacent to each other, and the drive shaft 34 extending from the inlet 12 of one of the tanks 10 and the drive shaft 34 extending from the outlet 14 of the other of the tanks 10 are inserted into one socket member and disposed in contact with each other, and the first gear teeth 56 and the second gear teeth 58 provided on the pair of drive shafts 34 are simultaneously gear-coupled to one gear member 52.

As described above, since power provided from one driving source is simultaneously transmitted to a pair of drive shafts 34, power may be transmitted to a pair of tanks 10 disposed adjacent to each other, thereby reducing the electrical energy required for simultaneously driving a plurality of tanks 10 and reducing the cost required for the polymer compound decomposition process.

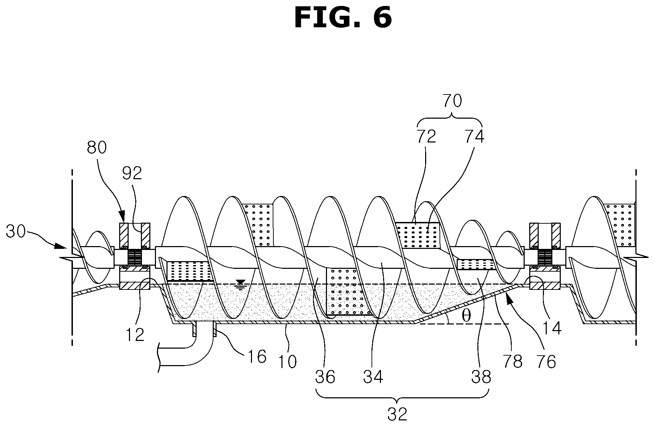

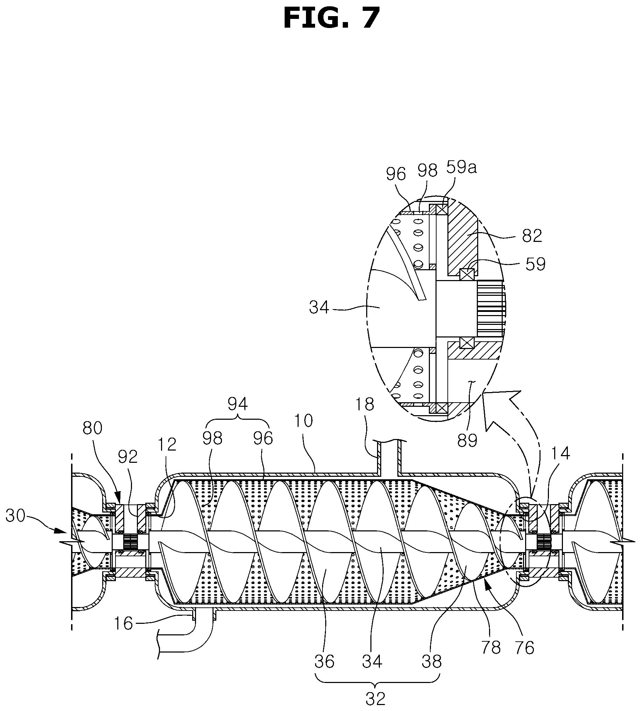

FIG. 6 is a cross-sectional view illustrating an apparatus for decomposing a polymer compound using a biochemically active solvent according to another embodiment of the present invention, and FIG. 7 is a cross-sectional view illustrating an apparatus for decomposing a polymer compound using a biochemically active solvent according to a third embodiment of the present invention.

Referring to FIGS. 6 and 7, in the apparatus for decomposing a polymer compound using a biochemically active solvent according to the second embodiment of the present invention, an upper portion of the tank 10 is open, and thus the biochemically active solvent contained inside the tank 10 and air in the atmosphere may be easily brought into contact, thereby effectively performing the biochemical action.

In addition, the apparatus for decomposing a polymer compound using a biochemically active solvent according to the third embodiment of the present invention includes a tank 10 in which an inlet and an outlet 14 are formed to allow a polymer compound to pass therethrough and a biochemically active solvent is contained, a transfer unit 30 configured to move the polymer compound supplied through the inlet toward the outlet 14, an agitation unit 70 configured to allow the polymer compound being moved by the operation of the transfer unit 30 to flow in a direction away from a moving direction thereof and agitate the polymer compound and the biochemically active solvent to increase the number of contacts and the contact time between the polymer compound and the biochemically active solvent, and a jamming prevention unit 94 providing a flow path through which the polymer compound passes along the transfer unit 30.

Accordingly, when the polymer compound is moved toward the outlet 14 by the operation of the transfer unit 30, the polymer compound moves along the flow path formed by the jamming prevention unit 94 to prevent the polymer compound from being jammed between the tank 10 and the transfer unit 30.

In addition, the biochemically active solvent of the present embodiment passes through an inner side or an outer side of the jamming prevention unit 94, and the biochemically active solvent remains contained in the tank 10 while the polymer compound decomposition process is continuously performed, thereby enabling the decomposition of a large amount of polymer compounds through a continuous process and reducing the time and cost required for performing the decomposition process of a large amount of polymer compounds.

The jamming prevention unit 94 of the present embodiment includes a barrel member 96 in which the transfer unit 30 is integrally installed and which is rotatably installed in the tank 10, and a plurality of mesh hole portions 98 provided in the barrel member 96 to allow the biochemically active solvent to pass through an inner side or an outer side of the barrel member 96.

Accordingly, the biochemically active solvent contained in the tank 10 passes through the inner side and the outer side of the barrel member 96 through the mesh hole portions 98 and comes into contact with the polymer compound to perform the decomposition process, and since the polymer compound moving toward the outlet 14 along the barrel member 96 is not in contact with the tank 10, it is possible to prevent a malfunction caused by the polymer compound being jammed in the gap between the transfer unit 30 and the tank 10.

In addition, the present embodiment further includes a residue prevention unit 76 configured to prevent the polymer compound being moved along the jamming prevention unit 94 by the operation of the transfer unit 30 from remaining and not passing through the outlet 14, and the residue prevention unit 76 includes an inclined portion 78 formed such that a diameter of the barrel member 96 decreases toward the outlet 14.

Accordingly, the polymer compound moved toward the outlet 14 by the operation of the transfer unit 30 is moved toward the outlet 14 along the barrel member 96 that is formed integrally with and rotated together with the transfer unit 30, and rises along the inclined portion 78 and is discharged to the outside of the tank 10 through the outlet 14.

Accordingly, it is possible to improve a recycling rate of a polymer compound by extracting a high-purity polymer compound formed of one material among polymer compounds formed of a plurality of materials. Further, since a transfer unit is provided to pass the polymer compound at a constant speed through a tank filled with a biochemically active solvent for decomposing polymer compounds formed of remaining materials among the polymer compounds of a plurality of materials, a large amount of the polymer compound may be decomposed by a continuous process. Accordingly, an apparatus for decomposing a polymer compound using a biochemically active solvent can be provided, which can reduce the time and cost required for a decomposition process of the polymer compound.

The present invention has been described with reference to one embodiment illustrated in the drawings, but this is merely exemplary, and it will be understood by those of ordinary skill in the art that various modifications and equivalent other embodiments are possible therefrom.

In addition, an example of the apparatus for decomposing a polymer compound using a biochemically active solvent has been described, but this is merely exemplary, and the decomposition apparatus of the present invention may be used in other products that are not an apparatus for decomposing a polymer compound using a biochemically active solvent.

Therefore, the true technical scope of protection of the present invention should be defined by the claims below.

### [Industrial Applicability]

The present invention relates to an apparatus for decomposing a polymer compound using a biochemically active solvent and is therefore industrially applicable.

## Claims

1. An apparatus for decomposing a polymer compound using a biochemically active solvent, comprising:
a tank in which an inlet and an outlet are formed to allow a polymer compound to pass therethrough and a biochemically active solvent is contained;
a transfer unit configured to move the polymer compound supplied through the inlet toward the outlet; and
an agitation unit configured to allow the polymer compound being moved by operation of the transfer unit to flow in a direction away from a moving direction thereof and agitate the polymer compound and the biochemically active solvent to increase the number of contacts and contact time between the polymer compound and the biochemically active solvent,
wherein a gap between the transfer unit and the tank is formed to be smaller than a particle diameter of a crushed polymer compound, such that when the polymer compound is moved toward the outlet by the operation of the transfer unit, the biochemically active solvent flows through the gap between the transfer unit and the tank while the biochemically active solvent remains contained in the tank during a continuous process of decomposing the polymer compound.

2. The apparatus of claim 1, further comprising a residue prevention unit configured to prevent the polymer compound moved by the operation of the transfer unit from remaining and not passing through the outlet.

3. The apparatus of claim 2, wherein the residue prevention unit includes an inclined portion formed such that a diameter of the tank decreases toward the outlet, and
the polymer compound moved toward the outlet by the operation of the transfer unit rises along the inclined portion and is discharged to the outside of the tank through the outlet.

4. The apparatus of claim 3, wherein the transfer unit includes:
a screw member configured to move the polymer compound supplied into the tank through the inlet toward the outlet and to raise the polymer compound along the inclined portion to be discharged to the outside of the tank; and
a driving unit configured to supply power to the screw member.

5. The apparatus of claim 4, wherein the screw member includes:
a drive shaft rotatably installed at the inlet and the outlet;
a first screw formed in a helical shape about the drive shaft and configured to press and move the polymer compound supplied to the tank toward the outlet when the drive shaft is rotated in one direction; and
a second screw integrally connected to the first screw and formed in a helical shape on the drive shaft, the second screw having a diameter that gradually decreases toward the outlet to maintain a constant gap with the inclined portion.

6. The apparatus of claim 5, further comprising a support unit configured to rotatably support the transfer unit and allow the polymer compound supplied to or discharged from the tank to pass therethrough.

7. The apparatus of claim 6, wherein the support unit includes:
a socket body into which the drive shaft of the transfer unit is rotatably inserted and which is installed at the inlet or the outlet;
a coupling rib which protrudes from the socket body and into which the inlet or the outlet is inserted;
a coupling ring fastened to the coupling rib to couple the coupling rib to the inlet or the outlet; and
a through-hole portion provided in the socket body to allow the polymer compound moving through the inlet or the outlet to pass therethrough.

8. The apparatus of claim 7, further comprising a transmission unit provided in the support unit to allow power provided by the driving unit to be transmitted to the drive shaft through the support unit.

9. The apparatus of claim 8, wherein the transmission unit includes a transmission hole portion provided in the socket body to allow a gear member of the driving unit to be inserted thereinto and gear-coupled to the drive shaft.

10. The apparatus of claim 9, wherein the driving unit includes:
a gear member connected to an output shaft of a motor that provides power and inserted along the transmission hole portion; and
a power transmission unit configured to provide power to the transfer unit by transmitting power transmitted from the gear member toward the inlet or the outlet.

11. The apparatus of claim 10, wherein the power transmission unit includes:
first gear teeth provided on the drive shaft inserted into the socket body from the inlet and gear-coupled to the gear member; and
second gear teeth provided on another drive shaft inserted into the socket body from the outlet and gear-coupled to the gear member,
wherein a pair of tanks are disposed adjacent to each other, and the drive shaft extending from the inlet of one of the tanks and the drive shaft extending from the outlet of the other of the tanks are inserted into the socket member and disposed in contact with each other, and
the first gear teeth and the second gear teeth provided on the pair of drive shafts are simultaneously gear-coupled to the gear member.

12. The apparatus of claim 5, wherein the agitation unit includes:
an agitation blade disposed between the first screw or the second screw so as to allow the polymer compound and the biochemically active solvent to flow in a direction away from the moving direction thereof when the polymer compound is moved toward the outlet by the operation of the transfer unit; and
a sieve hole portion provided in the agitation blade.

13. An apparatus for decomposing a polymer compound using a biochemically active solvent, comprising:
a tank in which an inlet and an outlet are formed to allow a polymer compound to pass therethrough and a biochemically active solvent is contained;
a transfer unit configured to move the polymer compound supplied through the inlet toward the outlet;
an agitation unit configured to allow the polymer compound being moved by operation of the transfer unit to flow in a direction away from a moving direction thereof and agitate the polymer compound and the biochemically active solvent to increase the number of contacts and contact time between the polymer compound and the biochemically active solvent; and
a jamming prevention unit providing a flow path through which the polymer compound passes along the transfer unit,
wherein, when the polymer compound is moved toward the outlet by the operation of the transfer unit, the polymer compound moves along the flow path formed by the jamming prevention unit to prevent the polymer compound from being jammed between the tank and the transfer unit or between the screw member and a barrel member, and
the biochemically active solvent passes through an inner side or an outer side of the jamming prevention unit, and the biochemically active solvent remains contained in the tank during a continuous process of decomposing the polymer compound.

14. The apparatus of claim 13, wherein the jamming prevention unit includes:
the barrel member in which the transfer unit is integrally installed and which is rotatably installed in the tank; and
a plurality of mesh hole portions provided in the barrel member to allow the biochemically active solvent to pass through an inner side or an outer side of the barrel member.

15. The apparatus of claim 13, wherein the transfer unit includes:
a screw member configured to move the polymer compound supplied into the tank through the inlet toward the outlet and to raise the polymer compound along an inclined portion to be discharged to the outside of the tank; and
a driving unit configured to supply power to the screw member,
wherein an end of the screw member is joined to the barrel member such that no gap is formed between the screw member and the barrel member, and the screw member and the barrel member rotate integrally.

16. The apparatus of claim 14, further comprising a residue prevention unit configured to prevent the polymer compound, which is moved along the jamming prevention unit by the operation of the transfer unit, from remaining and not passing through the outlet.

17. The apparatus of claim 16, wherein the residue prevention unit includes an inclined portion formed such that a diameter of the barrel member decreases toward the outlet, and
the polymer compound moved toward the outlet by the operation of the transfer unit rises along the inclined portion and is discharged to the outside of the tank through the outlet.
